(19) Europäisches Patentamt
European Patent Office
Office européen des brevets

(11) **EP 2 942 645 B1**

(12) **EUROPÄISCHE PATENTSCHRIFT**

(45) Veröffentlichungstag und Bekanntmachung des Hinweises auf die Patenterteilung:
**23.03.2016   Patentblatt 2016/12**

(51) Int Cl.:
*G01S 17/10* *(2006.01)*      *G01S 17/42* *(2006.01)*
*G01S 7/486* *(2006.01)*      *G01S 7/487* *(2006.01)*
*G01S 17/08* *(2006.01)*

(21) Anmeldenummer: **15161471.6**

(22) Anmeldetag: **27.03.2015**

(54) **ENTFERNUNGSMESSENDER SENSOR UND VERFAHREN ZUR ERFASSUNG UND ABSTANDSBESTIMMUNG VON OBJEKTEN**

DISTANCE MEASURING SENSOR AND METHOD FOR RECORDING AND DETERMINING THE DISTANCE OF AN OBJECT

CAPTEUR TÉLÉMÉTRIQUE ET PROCÉDÉ DESTINÉ À LA DÉTECTION ET LA DÉTERMINATION DE L'ÉLOIGNEMENT D'OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2014   DE 102014106465**

(43) Veröffentlichungstag der Anmeldung:
**11.11.2015   Patentblatt 2015/46**

(73) Patentinhaber: **SICK AG**
**79183 Waldkirch (DE)**

(72) Erfinder:
• **Rothenberger, Bernd**
**78355 Rheinhausen (DE)**
• **Jachmann, Fabian**
**79102 Freiburg (DE)**
• **Engler, Dr. Michael**
**79350 Sexau (DE)**
• **Dollmann, Thomas**
**79297 Oberwinden (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
EP-A2- 1 972 961      WO-A1-88/05922
WO-A1-99/60419      DE-A1- 4 133 196
US-A1- 2009 119 044

**Beschreibung**

Die Erfindung betrifft einen entfernungsmessenden Sensor und ein Verfahren zur Erfassung und Abstandsbestimmung von Objekten nach dem Oberbegriff von Anspruch 1 beziehungsweise 10.

Zahlreiche Sensoren nutzen ein Signallaufzeitprinzip, bei dem die Signallaufzeit, also das Zeitintervall zwischen Senden und Empfang eines Signals, über die Ausbreitungsgeschwindigkeit in eine Entfernung umgerechnet wird. Dabei werden so verschiedene Frequenzbereiche des elektromagnetischen Spektrums ausgenutzt wie Mikrowellen und Licht. Ein Anwendungsbereich für Mikrowellen ist die Füllstandsmessung. Hierbei wird die Signallaufzeit bis zur Reflexion an einer Grenzfläche des Mediums bestimmt, dessen Füllstand zu messen ist. Dabei werden die abgestrahlten Mikrowellen in einer Sonde geführt (TDR, time domain reflectometry), oder alternativ wie bei einem Radar frei abgestrahlt und von der Grenzfläche reflektiert.

Bei optoelektronischen Sensoren nach dem Prinzip des Lichtlaufzeitverfahrens werden Lichtsignale ausgesandt, und die Zeit bis zum Empfang der an Objekten remittierten oder reflektierten Lichtsignale wird gemessen. Optoelektronische Entfernungsmessung kann beispielsweise in der Fahrzeugsicherheit, der Logistikoder Fabrikautomatisierung oder der Sicherheitstechnik benötigt werden. Meist ist die gesuchte Ausgabegröße der gemessene Abstand. Alternativ kann ein Entfernungsmesser nach dem Lichtlaufzeitverfahren auch schaltend arbeiten, indem eine Entfernungsänderung eines in einem bestimmten Abstand erwarteten Reflektors oder eines reflektierenden oder remittierenden Objekts erkannt wird. Eine besondere Anwendung ist eine Reflexionslichtschranke mit Überwachung des Abstandes zu ihrem Reflektor. Das Lichtlaufzeitverfahren ist auch das Prinzip, nach dem entfernungsmessende Laserscanner arbeiten, die periodisch eine Überwachungsebene oder sogar einen dreidimensionalen Raumbereich abtasten. Speziell in der Sicherheitstechnik werden sichere Laserscanner eingesetzt, die konfigurierbare Schutzfelder auf unzulässige Eingriffe überwachen. Sichere Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Die Genauigkeit der Entfernungsmessung hängt entscheidend davon ab, wie gut der Empfangszeitpunkt bestimmt werden kann. Herkömmliche Pulsverfahren senden einen Einzelpuls und bestimmen die Lage des daraufhin empfangenen Echopulses. Dabei wird der Echopuls durch eine Komparatorschwelle von Störsignalen unterschieden. Das funktioniert nur dann zuverlässig, wenn die Störsignale unterscheidbar kleiner sind als die kleinsten aufzulösenden Echopulse. Schwierigkeiten ergeben sich besonders dann, wenn das Empfangssignal von starkem Rauschen etwa durch Fremdlicht überlagert ist, wenn bei großen Entfernungen ein schwaches Nutzsignal aufgelöst werden soll oder wenn ungünstige Umgebungsbedingungen herrschen, die systematisch relativ hohe Echopulse verursachen, die nicht erfasst werden sollen, etwa von Nebel, starker Staubbelastung der Luft, oder Verunreinigungen einer Frontscheibe des Sensors. Die herkömmliche Gegenmaßnahme ist der Versuch, durch bauliche Maßnahmen wie optische Streulichtunterdrückung, rauscharme elektronische Signalverarbeitung und dergleichen einen besonders großen Signalabstand zwischen schwächstem Nutzsignal und relevanten Störsignalpegeln zu erzeugen. Der erreichte Signalabstand entscheidet dann über die Robustheit des Systems gegenüber den verschiedenen Störeinflüssen.

Beispielsweise aus EP 1 972 961 A1 oder EP 2 469 296 A1 ist ein Laufzeitverfahren bekannt, das anstelle einer Einzelpulsauswertung eine Vielzahl von Einzelmessungen mit jeweils einem Sendepuls durchführt und die jeweiligen Empfangssignale in einem Histogramm aufaddiert. Durch diese statistische Auswertung addiert sich das Nutzsignal, während zufällige Rauscheinflüsse ausgemittelt werden, so dass das Signal-Rausch-Verhältnis deutlich verbessert wird. Eine Besonderheit des Verfahrens ist, dass verschiedene Maßnahmen getroffen werden, um diese komplexere Auswertung auf besonders kostengünstiger Hardware durchführen zu können. Dazu zählt, dass anstelle eines aufwändigen schnellen A/D-Wandlers lediglich ein Null-Schwellen-Komparator eingesetzt wird, der das Einzelsignal mit nur 1-Bit-Auflösung digitalisiert, also binarisiert. Es wird auch die Alternative eines A/D-Wandlers zu der Binarisierung erwähnt. Außerdem wird in EP 2 189 804A1 und EP 2 189 805 A1 die effektive Abtastrate eines solchen statistischen Verfahrens durch mehrere Maßnahmen erheblich erhöht, um den Empfangszeitpunkt und damit die Lichtlaufzeit mit größerer zeitlicher Präzision zu erfassen. Nachteilig ist, dass mit diesem Verfahren kaum möglich ist, zwischen schwachen Echos, beispielsweise von störenden Partikeln oder der Frontscheibe oder aufgrund von optischem beziehungsweise elektrischem Übersprechen, und Echos von zu erfassenden Objekten zu unterscheiden. Das Verfahren ist deshalb unter Umständen sehr empfindlich vor allem auf systematische Störsignale.

Es ist daher Aufgabe der Erfindung, die Zuverlässigkeit der Messwerterfassung eines entfernungsmessenden Sensors zu verbessern.

Diese Aufgabe wird durch einen entfernungsmessenden Sensor und ein Verfahren zur Erfassung und Abstandsbestimmung von Objekten nach Anspruch 1 beziehungsweise 10 gelöst. Dabei wird zunächst der einleitend erläuterte statistische Ansatz verfolgt, eine Vielzahl von Sendepulsen auszusenden und ein Histogramm der jeweils daraufhin aufgezeichneten digitalisierten Empfangssignale zu sammeln. Die Erfindung geht dann von dem Grundgedanken aus, das Empfangssignal bei dessen Digitalisierung nicht nur mit einer ersten Schwelle zu bewerten, sondern eine zweite Komparatoreinheit mit einer zweiten Schwelle einzusetzen. Das Paar aus erster und zweiter Komparatoreinheit stellt also ein Schwellenpaar bereit, das es ermöglicht, ein Rauschband mit Störechos in das Histogramm nicht oder jedenfalls geringer bewertet einfließen zu lassen und dadurch letztlich auszublenden.

Es sollte beachtet werden, dass die erfindungsgemäßen Schwellen eine andere Funktion haben als die Komparatorschwellen eines Einzelpulsverfahren. Im Stand der Technik bestimmt der Zeitpunkt der Überschreitung der Komparatorschwelle auch den Empfangszeitpunkt. Erfindungsgemäß bestimmen erste Schwelle und zweite Schwelle nur, mit welchem Gewicht ein jeweiliger Abschnitt des Empfangssignals zu dem Histogramm beiträgt. Nimmt man ohne Beschränkung der Allgemeinheit an, dass die zweite Schwelle unterhalb der ersten Schwelle liegt, so ergibt sich beispielsweise ein erster digitaler Zustand, wenn das Empfangssignal unter der zweiten Schwelle liegt, ein zweiter digitaler Zustand zwischen den Schwellen und ein dritter digitaler Zustand oberhalb der ersten Schwelle. Eine mögliche Gewichtung zählt das Bin des Histogramms, das zu dem jeweils betrachteten Abschnitt des Empfangssignals gehört, für den ersten digitalen Zustand nicht, für den zweiten digitalen Zustand einfach und für den dritten digitalen Zustand zweifach herauf. Die Bestimmung des Empfangszeitpunkts erfolgt erst nachgelagert auf Ebene des Histogramms.

Die Erfindung hat den Vorteil, dass kleine analoge Rauschpegel und kleine Störechos in dem Histogramm ausgeblendet sind und der Sensor damit unempfindlich gegenüber solchen Störungen wird. Das herkömmlich vorhandene, der Binarisierung geschuldete Binomialrauschen kann praktisch vollständig ausgeblendet werden. Die Komparatoreinheiten wirken wie ein äußerst effektives digitales Filter, das alle Signale zwischen den beiden Schwellen vollständig unterdrückt. Nur große analoge Rauschausschläge führen noch zu Rauschbeiträgen im Histogramm. Der Rauschpegel im digitalen Signal ist dadurch drastisch reduziert und die Auflösung der Distanzmessung verbessert.

Der Sensor weist vorzugsweise mindestens ein weiteres Paar Komparatoreinheiten auf, um eine ungerade Anzahl digitaler Zustände des jeweiligen Abschnitts des Empfangssignals zu gewinnen. Jedes weitere Paar Komparatoreinheiten bringt ein zusätzliches Schwellenpaar mit. Dadurch können statt drei digitalen Zuständen auch eine größere Anzahl digitaler Zustände unterschieden und im Histogramm gewichtet werden, nämlich mit jedem Paar Komparatoreinheiten zwei zusätzliche digitale Zustände, was zu fünf digitalen Zuständen bei zwei Paaren Komparatoreinheiten führt, sieben digitalen Zuständen bei drei Paaren Komparatoreinheiten und so weiter. Die ungerade Anzahl von digitalen Zuständen rührt daher, dass innerhalb des auszublendenden Bandes mit der Nulllinie eigentlich nicht von Interesse ist, ob das Empfangssignal positiv oder negativ ist. Hier werden also zwei an sich unterscheidbare Zustände in einem digitalen Zustand zusammengefasst. Deshalb kann vorzugsweise auf die herkömmliche Schwelle auf der Nulllinie gänzlich verzichtet und so eine Null-Schwellen-Komparatoreinheit samt deren Auswertung eingespart werden.

Die erste Schwelle und die zweite Schwelle weisen bevorzugt unterschiedliche Vorzeichen auf. Der digitale Zustand zwischen den beiden Schwellen umfasst damit die Nulllinie und entspricht dem auszublendenden Rauschband. Besonders bevorzugt weisen die beiden Schwellen den gleichen Betrag auf. Damit liegen die digitalen Zustände symmetrisch um die Nulllinie, nämlich zwei der digitalen Zustände im Abstand des Betrags der Schwellen und ein digitaler Zustand mit der Nulllinie in seiner Mitte. Bei Ausführungsformen mit mehreren Paaren Komparatoreinheiten gilt die Symmetrie vorzugsweise für jedes Schwellenpaar, obwohl prinzipiell auch denkbar wäre, für ein Vorzeichen des Empfangssignals mehr digitale Zustände zu unterscheiden als für das andere Vorzeichen.

Die Steuer- und Auswertungseinheit ist bevorzugt auf einem digitalen Baustein, insbesondere in programmierbarer Logik, in ASIC (Application Specific Integrated Circuit) oder auf einem FPGA (Field Programmable Gate Array) implementiert. Ein derartiger digitaler Baustein ist vergleichsweise kostengünstig und dennoch in der Lage, nicht nur dank des erfindungsgemäßen Histogramm- oder Pulsmittelungsverfahrens die Anforderungen an eine hochpräzise Messung zu erfüllen, sondern auch noch sehr viele der geforderten Funktionen mit zu implementieren, statt dafür zusätzliche Bausteine vorzusehen. Unter digitalem Baustein soll hier und im Folgenden jegliche konfigurierbare digitale Auswertung gemeint sein, die durch Vorkonfiguration der digitalen Verschaltung des Bausteins auf die Anwendung angepasst ist, statt wie bei einem echten Mikroprozessor durch Ablauf eines Programms auf einer universellen Auswertungseinheit zu erfolgen. Die derzeit bevorzugte Variante einer solchen programmierbaren Logik ist ein FPGA. Deshalb wird im Folgenden mehrfach von FPGA stellvertretend für die genannte Familie von digitalen Bausteinen gesprochen, die Erfindung ist aber darauf nicht beschränkt.

Die Komparatoreinheiten sind bevorzugt über Eingänge des digitalen Bausteins implementiert. Dadurch sind keine zusätzlichen Bauelemente erforderlich, oder jedenfalls nur einfachste analoge Schaltelemente beispielsweise für ein Widerstandsnetz, das das Empfangssignal den gewünschten Schwellen entsprechend mehreren Eingängen des digitalen Bausteins zuführt. Alternativ sind auch eigene Komparatoren als separate Schaltungselemente möglich, die dann den Vorteil haben, dass ihre Spezifikation von derjenigen des digitalen Bausteins unabhängig ist. Das erleichtert den Einsatz in der Sicherheitstechnik, weil auf die sichere Spezifikation der Eingänge des digitalen Bausteins in der Praxis kein Einfluss genommen werden kann, verlässlich spezifizierte Komparatoren dagegen verfügbar sind.

Zwischen Empfänger und A/D-Wandler ist vorzugsweise eine analoge Vorverarbeitungsschaltung mit einem Filter zur Umwandlung des zunächst unipolaren Empfangssignals in ein bipolares Signal angeordnet. Die Echos des Sendepulses von Objekten oder Störern im Überwachungsbereich sind zunächst ebenfalls zumindest grob pulsförmig, bilden also einen Peak und sind demnach unipolar. Das gilt vor allem bei Lichtsignalen, die nicht negativ werden können und demnach auch nur unipolare Empfangssignale erzeugen. Das Filter wandelt das unipolare Empfangssignal in ein bipolares Signal beispielsweise als eine Schwingung mit mindestens einem Maximum, einem Minimum und einem Nulldurchgang dazwischen. Als Filter eignet sich insbesondere ein Bandpassfilter oder ein Differenzierer. Die Vorverarbeitungsschaltung kann zusätzlich einen Verstärker, insbesondere einen Transimpedanzverstärker, vor dem Filter aufweisen.

Zwischen dem Empfänger und den Komparatoreinheiten ist bevorzugt ein Tiefpassfilter angeordnet. Das ist ein weiteres Beispiel für ein analoges Schaltungselement, welches das analoge Empfangssignal für die Komparatoreinheiten aufbereitet. Das Tiefpassfilter sorgt dafür, dass die Flanken eines Empfangsechos abgeflacht werden und deshalb deren zeitliche Lage genauer bestimmt werden kann.

Der Sensor ist bevorzugt als optoelektronischer Sensor, insbesondere Laserscanner ausgebildet, wobei der Sender ein Lichtsender und der Empfänger ein Lichtempfänger ist. Derartige auf Licht basierende Sensoren werden häufig zur Entfernungsmessung eingesetzt. Sie können einstrahlig sein, also auf ein Messobjekt ausgerichtet werden. Denkbar ist aber auch ein Laserscanner, bei dem die Richtung beispielsweise mittels eines Drehspiegels periodisch variiert wird, in welche die Sendepulse ausgesandt werden, so dass eine Überwachungsebene oder sogar ein Raumbereich abgetastet wird. Ein Beispiel für einen alternativen, nicht auf optischen Signalen basierenden Sensor ist ein TDR-Füllstandssensor.

Der Sensor ist bevorzugt als sicherer Sensor mit einem Sicherheitsausgang ausgebildet, bei dem die Steuer- und Auswertungseinheit dafür ausgebildet ist, unzulässige Eingriffe in Schutzfelder innerhalb des Überwachungsbereichs zu erkennen und daraufhin ein sicherheitsgerichtetes Abschaltsignal an dem Sicherheitsausgang auszugeben. Sichere Sensoren sind beispielsweise Sicherheitsscanner, entfernungsmessende beziehungsweise tastende Sicherheitslichtgitter oder sichere 3D-Lichtlaufzeitkameras. Das bekannte Pulsmittelungsverfahren wäre für Anwendungen in der Sicherheitstechnik zu empfindlich: Der Sensor müsste sicherheitshalber auch bei der Erfassung eines schwachen Störsignals ein sicherheitsgerichtetes Abschaltsignal ausgeben, solange das schwache Störsignal nicht verlässlich als Störung erkannt wird. Aufgrund der erfindungsgemäßen Ausblendung solcher Störsignale werden viele Fehlabschaltungen verhindert, und so wird die Verfügbarkeit des sicheren Sensors erheblich verbessert. Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Fig. 1      ein Blockschaltbild eines entfernungsmessenden Sensors;

Fig. 2      ein Blockschaltbild eines Messkerns für die Signalverarbeitung in dem Sensor gemäß Figur 1;

Fig. 3      einen beispielhaften Verlauf eines Empfangssignals zur Erläuterung der Klassifizierung von digitalen Zuständen und ihrer Gewichtung mittels zweier Schwellen;

Fig. 4      eine beispielhafte Darstellung eines Histogramms, das durch herkömmliches Sammeln über eine Vielzahl von Sendepulsen entsteht;

Fig. 5      eine Darstellung eines Histogramms, das durch erfindungsgemäßes Sammeln mit unterschiedlicher Gewichtung von drei digitalen Zuständen entsteht;

Fig. 6a-b      eine idealisierte Darstellung eines starken Nutzechos beziehungsweise eines schwachen Störechos und des jeweils zugehörigen Histogramms; und

Fig. 7      beispielhafte Kennlinien der Aussteuerung des Histogramms gegenüber dem Empfangssignalpegel für verschiedene Schwellenpaare.

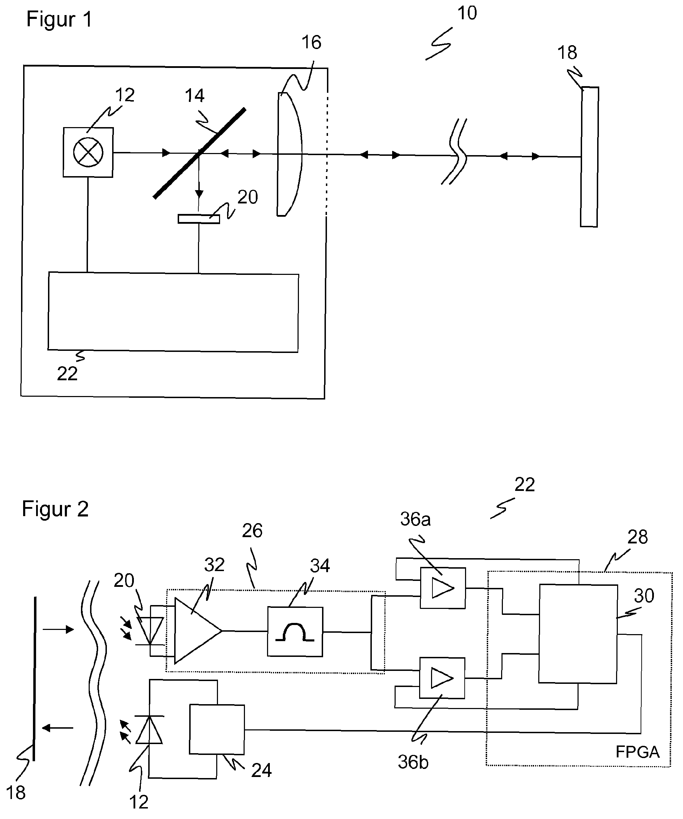

Figur 1 zeigt ein Blockschaltbild eines entfernungsmessenden Sensors 10 in einer Ausführungsform als eindimensionaler optoelektronischer Entfernungstaster. Ein Lichtsender 12 ist so ausgerichtet, dass sein Sendelicht einen Teilerspiegel 14 transmittiert und anschließend über eine Optik 16 in einen Überwachungsbereich 18 gelangt. Dort wird das Sendelicht, wenn sich ein Objekt 18 im Strahlengang befindet, an diesem Objekt 18 reflektiert oder remittiert und kehrt erneut durch die Optik 16 zu dem Teilerspiegel 14 zurück, wo es in einem Lichtempfänger 20 gespiegelt und dort erfasst wird. Die Teilerspiegelanordnung ist rein beispielhaft zu verstehen, die Erfindung umfasst ebenso andere Anordnungen ohne Teilerspiegel wie beispielsweise Doppelaugen. Auch die Erläuterung an einem eindimensionalen optoelektronischen Sensor ist nur exemplarisch zu verstehen, denn ebenso kann der Sensor 10 ein mehrdimensionales System sein, wie ein Lichtgitter oder ein Laserscanner, oder mit gänzlich anderen elektromagnetischen Signalen arbeiten, wie ein TDR-Füllstandssensor.

Ein Messkern 22 steuert den Lichtsender 12 an und wertet die Signale des Lichtempfängers 20 aus. Um für eine Abstandsmessung des Objekts 18 eine Lichtlaufzeit zu ermitteln, werden Lichtpulse ausgesandt und wieder empfangen und die Differenz zwischen Sende- und Empfangszeitpunkt wird bestimmt. Diese Auswertung erfolgt aber nicht auf Basis von Einzelereignissen mit nur einem einzigen Lichtpuls, sondern in einer Auswertung mittels eines Histogramms, das von einer Vielzahl von Einzelereignissen gebildet wird.

Diese statistische Auswertung wird nun genauer erläutert. Figur 2 zeigt ein Blockschaltbild des Messkerns 22. In einem Sendepfad ist neben dem eigentlichen Sender 12 noch eine Treiberschaltung 24 vorgesehen, während in einem Empfangspfad der Empfänger 20 das Empfangssignal über einen analogen Vorverarbeiter 26 einer beispielsweise auf einem FPGA 28 implementierten Steuer- und Auswertungseinheit 30 zuführt.

Der analoge Vorverarbeiter 26 umfasst einen Verstärker 32, etwa einem Transimpedanzverstärker, der das Signal des Empfängers 20 annimmt und verstärkt. Ein nachgeschaltetes Filter 34, das beispielsweise ein Bandpassfilter oder ein Differenzierer sein kann, wandelt das unipolare Signal des Pulses in ein bipolares Signal um. Verstärker 32 und Filter 34 können auch in umgekehrter Reihenfolge geschaltet sein. Das derart aufbereitete analoge Empfangssignal wird in zwei Komparatoren 36a-b mit je einer Schwelle verglichen und das jeweilige Vergleichsergebnis der Steuer- und Auswertungseinheit 30 übergeben. Die Schwellen können von der Steuer- und Auswertungseinheit 30 einstellbar ausgebildet sein. Anstelle von Komparatoren können auch andere geeignete Schaltungselemente für einen Schwellenvergleich verwendet werden, etwa Limiter-Verstärker, die ohne DC-Offsetkorrektur gegen eine Vergleichsspannung messen.

Alternativ zu der Ausführungsform gemäß Figur 2 erfolgt die Digitalisierung des Empfangssignals in Komparatoren, die über Eingänge des FPGA implementiert sind. In diesem Fall umfasst der analoge Vorverarbeiter 26 vorzugsweise noch eine Schaltung, die den Eingängen geeignete Spannungsdifferenzen zuführt, beispielsweise ein Widerstandsnetzwerk. Außerdem kann der Vorverarbeiter 26 einen nicht dargestellten Tiefpassfilter aufweisen, um die Flankensteilheit des eingehenden Empfangssignals zu reduzieren. Damit wird eine bessere zeitliche Auflösung möglich.

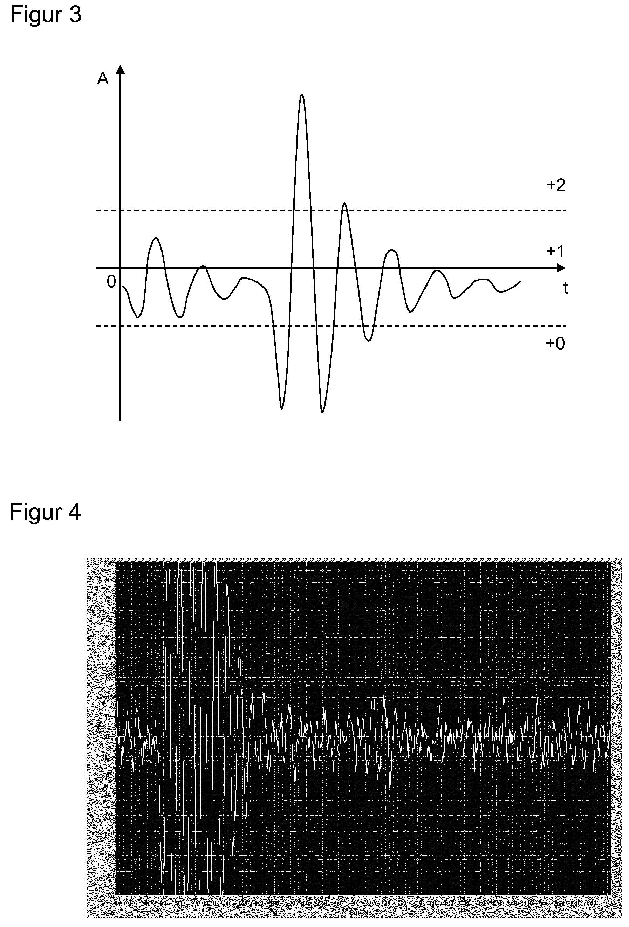

Figur 3 zeigt einen rein beispielhaften Verlauf des Empfangssignals und mit gestrichelten Linien die beiden Schwellen der Komparatoren 36a-b. Die Schwellen liegen vorzugsweise symmetrisch zu der Nulllinie, also dem Mittelwert des analogen Empfangssignals. Um das analoge Empfangssignal digital zu erfassen, wird für jeden Abtastzeitpunkt geprüft, ob das Empfangssignal unterhalb der unteren Schwelle, zwischen den Schwellen oder oberhalb der oberen Schwelle liegt. Im Betrieb werden solche analogen Empfangssignale wiederholt aufgezeichnet und in einem Histogramm gemeinsam ausgewertet. Dabei ist der Beitrag eines Abtastpunkts abhängig davon, welcher der drei durch die Schwellen bestimmten Zustände der zu dem Abtastpunkt zugehörigen Amplitude des analogen Empfangssignals zugewiesen wird. In einer bevorzugten und in Figur 3 gezeigten Ausführungsform sind diese Beiträge, die in das zeitlich zugehörige Bin des Histogramms addiert werden, die Wert +0, +1 und +2.

Der Messkern gemäß Figur 2 bestimmt einen Entfernungswert wie folgt. Mehrfach wiederholt wird ein Sendesignal ausgesandt, das die Bestimmung eines präzisen Zeitpunkts ermöglicht. Als Signalform eignet sich ein Rechteckpuls, es sind aber auch andere Pulse, wie beispielsweise Gausspulse, multimodale Signale beispielsweise zur codierten Zuordnung jedes Signals und auch Stufen denkbar. All diese Signalformen werden im Weiteren nur noch als Puls bezeichnet.

Der Puls wird an dem Zielobjekt 14 reflektiert und nach Umwandlung in dem Empfänger 20 in ein elektrisches Signal in dem Verstärker 32 verstärkt. Der Empfangspuls entspricht in seiner Form abgesehen von Raucheffekten noch der Form des Sendepulses, ist also ein unipolares Signal. In dem Filter 34 wird der unipolare Empfangspuls zu einem bipolaren Signal umgewandelt. Anders ausgedrückt wird der Empfangspuls genutzt, um eine Schwingung anzustoßen. Die Signalamplitude wird dadurch in das Ausklingverhalten der Schwingung transponiert, was den Umgang mit einem großen Dynamikbereich wesentlich erleichtert. Dies kann mit einem Bandpassfilter geeigneter Filterfrequenz realisiert werden.

Das bipolare Signal wird wie zu Figur 3 beschrieben digitalisiert. Im Sprachgebrauch von Histogrammen wird die Zeitachse des Empfangssignals in Bins unterteilt, deren Breite der Abtastperiode entspricht. Die Bins sind anfänglich auf Null gesetzt und werden mit jeder Messwiederholungen um +0, +1 oder +2 heraufgezählt, je nachdem wie hoch die Amplitude zu dem Zeitpunkt durch die Schwellen bewertet wird, der dem jeweiligen Bin zugeordnet ist. Ohne Histogramm ausgedrückt handelt es sich letztlich um eine diskrete Integration. Die Zeitauflösung ist zunächst auf Binbreite und damit die Taktrate beschränkt, mit welcher die Komparatoren 36a-b beziehungsweise das FPGA 28 das analoge Empfangssignal abtasten können. Durch verschiedene Techniken, wie beispielsweise in den eingangs zitierten EP 2 189 804 A1 und EP 2 189 805 A1 beschrieben, kann diese Auflösung weiter erhöht werden, worauf aber hier nicht näher eingegangen wird.

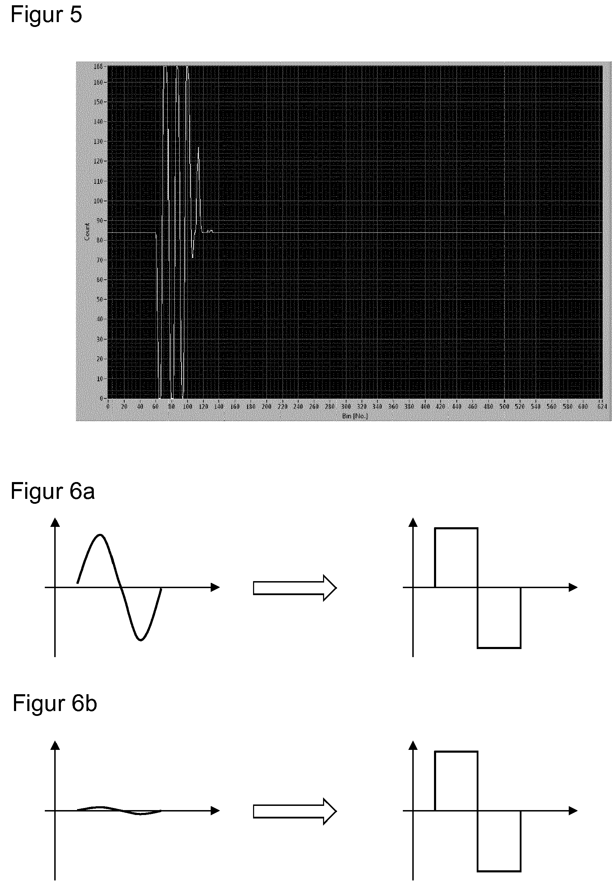

Die Figuren 4 und 5 zeigen beispielhafte Histogramme, die aus dem erläuterten Akkumulieren eines Histogramms aus jeweils 84 Messwiederholungen entstanden sind. Dies sind digitale Signale, die anschließend zur Bestimmung des Empfangszeitpunkts und damit der Lichtlaufzeit von der Steuer- und Auswertungseinheit 30 weiter ausgewertet werden.

Dabei zeigt Figur 4 zunächst zum Vergleich das herkömmlich aufgenommene digitale Signal mit einfacher Binarisierung, d. h. wenn anstelle zweier Schwellen in zwei Komparatoren 36a-b nur eine einfache Schwelle auf der Nulllinie gesetzt und ein überschwelliges Empfangssignal mit +1, ein unterschwelliges mit +0 zu dem Bin addiert wird. Zwar ist der Empfangspuls anhand der davon ausgelösten Schwingung klar ausgeprägt. Vor und nach dieser Schwingung erkennt man aber auch signifikante Beiträge des Binomialrauschens.

Das Auftreten des Binomialrauschens ist leicht erklärbar. In allen Bins, in denen kein Empfangspuls auftritt, liegt der Signalwert praktisch, aber nicht ganz genau bei Null. Die Binarisierungsschwelle trifft hier in jeder Messwiederholung eine zufällige Auswahl. Dies führt bei k=84 Messwiederholungen zu im Mittel mit k/2=42 gefüllten Bin bei einer Streuung von $\pm\sqrt{k}/2$, eben dem Binomialrauschen. Gerade bei verhältnismäßig wenigen Messwiederholungen dominiert das Binomialrauschen andere Rauscheffekte, und die hohe Standardabweichung erschwert die Auswertung erheblich.

Figur 5 dagegen zeigt das aus den gleichen analogen Empfangssignalen gewonnene digitale Signal bei erfindungsgemäßer Anwendung von zwei Schwellen und entsprechender Gewichtung der drei dadurch definierten Zustände. Jetzt ist der Rauschuntergrund flach und zugleich die Schwingung klar begrenzt. Die Robustheit einer Auswertung dieses digitalen Signals ist erheblich verbessert, da sowohl die statistischen Peaks im Binomialrauschen als auch kleinere Störsignale wie durch Verschmutzungen auf einer Frontscheibe des Sensors 10 nicht mehr so leicht zu Fehlmessungen führen.

Der Schwingung in Figur 5 kann erkennbar relativ einfach eine genaue zeitliche Lage zugeordnet werden, mit welcher der Empfangszeitpunkt bestimmt ist. Beispielsweise wird dazu der erste Nulldurchgang verwendet. Die klar abgegrenzte Schwingung hat sogar noch einen weiteren Vorteil wegen der sogenannten Hell-Dunkel-Korrektur der Abstandsbestimmung. Dies beschreibt das an sich bekannte Vorgehen, den Pegel des Empfangssignals zu schätzen und danach den Abstand noch einmal zu korrigieren, da ansonsten dunkle Ziele 18 scheinbar in einem anderen Abstand gemessen würden als helle Ziele 18. Die Pegelschätzung ist in dem digitalen Signal sehr einfach, da das Integral der Schwingung hierfür ein Maß ist und durch einfaches Aufaddieren der betreffenden Bins erhalten wird. Ersichtlich bietet die scharf abgetrennte Schwingung der Figur 5 eine wesentlich genauere Grundlage für diese Integralbestimmung als die Schwingung der Figur 4, bei der nicht abgrenzbar ist, wo die Schwingung endet und wo das reine Binomialrauschen beginnt.

Wie der Vergleich von Figur 4 und 5 zeigt, geht der Effekt der zwei Komparatoren 36a-b mit deren Schwellenpaar gegenüber einer herkömmlichen Binarisierung weit über das hinaus, was man von einer dreiwertigen gegenüber einer zweiwertigen Abtastung erwarten würde. Das liegt an bisher nicht erkannten Zusammenhängen des eingangs beschriebenen bekannten Pulsmittelungsverfahrens, die erfindungsgemäß durch geschickte Schwellenwahl zum Ausblenden eines Rauschbandes genutzt werden.

Das herkömmliche Pulsmittelungsverfahren hat nämlich den zunächst paradox erscheinenden Nachteil, dass es zu empfindlich ist. Die Nachweisgrenze liegt im Rauschen. Bei kleinen Rauschpegeln werden bereits kleinste Signale registriert. Durch die indirekte Auswertung des Empfangssignals über Histogramme wird nicht die eigentliche analoge Signalamplitude ausgewertet, sondern das Signal/Rauschverhältnis. Außerhalb der Sicherheitstechnik wird dies oft nicht als störend empfunden, solange das System nur auch unter ungünstigen Bedingungen durch beispielsweise Fremdlicht oder Temperatur noch empfindlich genug ist. In der Sicherheitstechnik muss aber, solange eine Störung nicht verlässlich als solche erkannt oder ausgeblendet ist, vorsichtshalber eine sicherheitsgerichtete Abschaltung erfolgen, so dass ohne die erfindungsgemäßen Maßnahmen die Verfügbarkeit erheblich herabgesetzt würde.

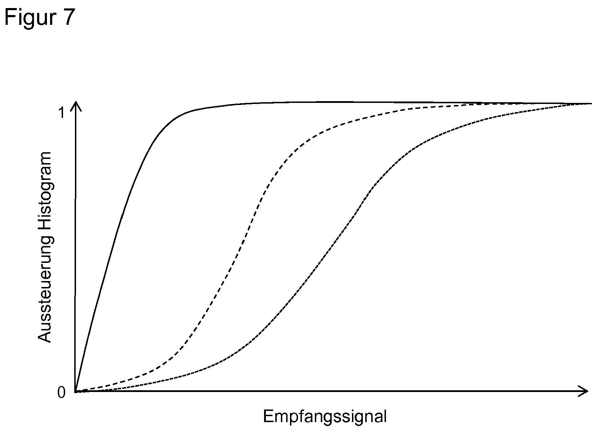

Diese Ausführungen sollen in den Figuren 6 und 7 noch einmal illustriert und systematisiert werden. Die Figuren 6a-b zeigen in einer Idealisierung ohne Rauschanteile ein starkes Nutzecho und beziehungsweise ein schwaches Störecho jeweils mit zugehörigern Histogramm bei dem herkömmlichen Pulsmittelungsverfahren. Das starke Nutzecho stammt beispielsweise von einem zu erfassenden Objekt und das schwache Störecho von einem kleinen Störkörper wie einem Staubkorn. Die zugehörigen Histogramme sind aber identisch und erlauben keine Unterscheidung, weil auch das Störecho das Histogramm schon vollständig ausgesteuert. Das liegt daran, dass die 1-BitDigitalisierung nur entscheidet, ob ein Signal oberhalb der Binarisierungsschwelle liegt, in diesem Fall also positiv ist oder nicht. Dieses Kriterium erfüllen aber das starke Nutzecho und das schwache Störecho gleichermaßen und für das Histogramm ununterscheidbar.

In einer Betrachtung als Kennlinie der Aussteuerung des Histogramms gegenüber dem Empfangssignalpegel gemäß Figur 7 drückt sich dies in der sich rasch asymptotisch der Vollaussteuerung nähernden durchgezogenen Kennlinie aus. Mit dem erfindungsgemäß verfügbaren Schwellenpaar der Komparatoren 36a-b wird dagegen die gestrichelte S-förmige Kennlinie erreicht, die Rauschen und kleine Störechos unterdrückt. Durch weitere Schwellenpaare zusätzlicher Komparatoren, die vorzugsweise je Schwellenpaar nochmals zwei zusätzliche Zustände anhand ebenfalls symmetrisch zur Nulllinie gesetzter Schwellen definieren, kann die Differenzierung verschieden stark ausgeprägter Echos noch weiter vorangetrieben werden, wie die gestrichelt dargestellte Kennlinie illustriert.

**Patentansprüche**

1.  Entfernungsmessender Sensor (10) zur Erfassung und Abstandsbestimmung von Objekten (18) in einem Überwachungsbereich mit einem Sender (12) zum Aussenden von Sendepulsen, einem Empfänger (20) zum Erzeugen eines Empfangssignals aus den in dem Überwachungsbereich remittierten Sendepulsen, einer ersten Komparatoreinheit (36a) und einer zweiten Komparatoreinheit (36b) zur Digitalisierung des Empfangssignals anhand einer ersten Schwelle und einer zweiten Schwelle sowie einer Steuer- und Auswertungseinheit (30), die dafür ausgebildet ist, über den Sender (12) eine Vielzahl von Sendepulsen auszusenden, die daraufhin von dem Empfänger (20) erzeugten Empfangssignale in einem Histogramm zu sammeln und aus dem Histogramm einen Empfangszeitpunkt und somit einen Messwert für die Signallaufzeit von dem Sensor (10) zu dem Objekt (18) zu bestimmen"
    **dadurch gekennzeichnet,**
    **dass** die erste Komparatoreinheit (36a), die zweite Komparatoreinheit (36b) und die Steuer- und Auswertungseinheit (30) dafür ausgebildet sind, anhand der ersten Schwelle und der zweiten Schwelle drei digitale Zustände eines jeweiligen Abschnitts des Empfangssignals zu gewinnen und die Beiträge des Abschnitts zu dem Histogramm je nach digitalem Zustand zu gewichten, und dass die beiden Schwellen, insbesondere symmetrisch, um eine Nulllinie des Empfangssignals liegen und der digitale Zustand zwischen den beiden Schwellen einem auszublendenden Rauschband entspricht.

2.  Sensor (10) nach Anspruch 1,
    der mindestens ein weiteres Paar Komparatoreinheiten aufweist, um eine ungerade Anzahl digitaler Zustände des jeweiligen Abschnitts des Empfangssignals zu gewinnen.

3.  Sensor (10) nach Anspruch 1 oder 2,
    wobei die erste Schwelle und die zweite Schwelle verschiedene Vorzeichen und insbesondere den gleichen Betrag aufweisen.

4.  Sensor (10) nach einem der vorhergehenden Ansprüche,
    wobei die Steuer- und Auswertungseinheit (30) auf einem digitalen Baustein (28), insbesondere in programmierbarer Logik, in ASIC oder auf einem FPGA implementiert ist.

5.  Sensor (10) nach Anspruch 4,

wobei die Komparatoreinheiten über Eingänge des digitalen Bausteins (28) implementiert sind.

6.  Sensor (10) nach einem der vorhergehenden Ansprüche,
    wobei zwischen dem Empfänger (20) und den Komparatoreinheiten (36a-b) eine analoge Vorverarbeitungsschaltung (26) mit einem Filter (34) zur Umwandlung eines zunächst unipolaren Empfangssignals in ein bipolares Signal angeordnet ist.

7.  Sensor (10) nach einem der vorhergehenden Ansprüche,
    wobei zwischen dem Empfänger (20) und den Komparatoreinheiten (36a-b) ein Tiefpassfilter angeordnet ist.

8.  Sensor (10) nach einem der vorhergehenden Ansprüche,
    der als optoelektronischer Sensor, insbesondere Laserscanner ausgebildet ist, wobei der Sender (12) ein Lichtsender und der Empfänger (20) ein Lichtempfänger ist.

9.  Sensor (10) nach einem der vorhergehenden Ansprüche,
    der als sicherer Sensor, insbesondere Sicherheitsscanner, mit einem Sicherheitsausgang ausgebildet, bei dem die Steuer- und Auswertungseinheit (30) dafür ausgebildet ist, unzulässige Eingriffe in Schutzfelder innerhalb des Überwachungsbereichs zu erkennen und daraufhin ein sicherheitsgerichtetes Abschaltsignal an dem Sicherheitsausgang auszugeben.

10. Verfahren zur Erfassung und Abstandsbestimmung von Objekten (18) in einem Überwachungsbereich, bei dem eine Vielzahl von Sendepulsen ausgesandt und aus den in dem Überwachungsbereich remittierten Sendepulsen Empfangssignale erzeugt werden, welche mit Hilfe einer ersten Komparatoreinheit (36a) und einer zweiten Komparatoreinheit (36b) mit einer ersten Schwelle und einer
    zweiten Schwelle digitalisiert und in einem Histogramm gesammelt werden, um aus dem Histogramm einen Empfangszeitpunkt und somit einen Messwert für die Signallaufzeit zu dem Objekt (18) zu bestimmen,
    **dadurch gekennzeichnet,**
    **dass** mit den beiden Schwellen drei digitale Zustände eines jeweiligen Abschnitts der Empfangssignale gewonnen und die Beiträge des Abschnitts zu dem Histogramm je nach digitalem Zustand gewichtet werden und dass die beiden Schwellen, insbesondere symmetrisch, um eine Nulllinie des Empfangssignals liegen und der digitale Zustand zwischen den beiden Schwellen einem auszublendenden Rauschband entspricht.

## Claims

1. A distance-measuring sensor (10) for detecting and determining the distance of objects (18) in a monitored zone, the distance-measuring sensor (10) comprising a transmitter (12) for transmitting transmitted pulses, a receiver (20) for generating a received signal from the transmitted pulses remitted in the monitored zone, a first comparator unit (36a) and a second comparator unit (36b) for digitizing the received signal with reference to a first threshold and a second threshold, as well as a control and evaluation unit (30) which is configured to transmit a plurality of transmitted pulses via the transmitter (12), to collect the received signals thereupon generated by the receiver (20) in a histogram and to determine a received point in time from the histogram and thus to determine a measured value for the signal transit time from the sensor (10) to the object (18), **characterized in that** the first comparator unit (36a), the second comparator unit (36b) and the control and evaluation unit (30) are configured to acquire three digital states of a respective section of the received signal with reference to the first threshold and to the second threshold and to weight the contributions of the section to the histogram in dependence on the digital state, and **in that** the two thresholds are placed on both sides of a zero line of the received signal, in particular symmetrically, and the digital state between the two thresholds corresponds to a noise band to be suppressed.

2. The sensor (10) in accordance with claim 1, which has at least one further pair of comparator units to acquire an odd number of digital states of the respective section of the received signal.

3. The sensor (10) in accordance with claim 1 or 2, wherein the first threshold and the second threshold have different signs and in particular the same magnitude.

4. The sensor (10) in accordance with any of the preceding claims, wherein the control and evaluation unit (30) is implemented on a digital component (28), in particular in programmable logic, in ASIC or on an FPGA.

5. The sensor (10) in accordance with claim 4, wherein the comparator units are implemented via inputs of the digital component (28).

6. The sensor (10) in accordance with any of the preceding claims, wherein an analog preprocessing circuit (26) having a filter (34) for converting an initially unipolar received signal into a bipolar signal is arranged between the receiver (20) and the comparator units (36a-b).

7. The sensor (10) in accordance with any of the preceding claims, wherein a low pass filter is arranged between the receiver (20) and the comparator units (36a-b).

8. The sensor (10) in accordance with any of the preceding claims, which is configured as an optoelectronic sensor, in particular a laser scanner, wherein the transmitter (12) is a light transmitter and the receiver (20) is a light receiver.

9. The sensor (10) in accordance with any of the preceding claims, which is configured as a safe sensor, in particular a safe laser scanner, having a safety output and wherein the control and evaluation unit (30) is configured to recognize inadmissible intrusions into protected fields within the monitored zone and thereupon to output a safety-directed shut-down signal at the safety output.

10. A method for the detection and determination of the distance of objects (18) in a monitored zone, in which a plurality of transmitted pulses are transmitted and received signals are generated from the transmitted pulses remitted in the monitored zone, said received signals being digitized with the aid of a first comparator unit (36a) and a second comparator unit (36b) having a first threshold and a second threshold and being collected in a histogram to determine a received point in time and thus a measured value for the signal transit time to the object (18) from the histogram, **characterized in that** three digital states of a respective section of the received signals are acquired using the first comparator unit and the second comparator unit and the contributions of the section to the histogram are weighted depending on the digital state, and **in that** the two thresholds are placed on both sides of a zero line of the received signal, in particular symmetrically, and the digital state between the two thresholds corresponds to a noise band to be suppressed.

## Revendications

1. Capteur de mesure de distance (10) pour la détection et la détermination de distance d'objets (18) dans une zone de surveillance, comprenant un émetteur (12) pour émettre des impulsions émises, un récepteur (20) pour engendrer un signal de réception à partir des impulsions émises réémises dans la zone de surveillance, une première unité de comparaison (36a) et une seconde unité de comparaison (36b) pour numériser le signal reçu au moyen d'un premier seuil et d'un second seuil, ainsi qu'une unité de commande et d'évaluation (30) qui est réalisée pour émettre via l'émetteur (12) une pluralité d'impulsions émises, pour collecter suite à cela les signaux de réception engendrés par le récepteur (20) dans un histogramme et pour déterminer à partir de l'histogramme un instant de réception et ainsi une valeur de mesure pour la durée de parcours du signal depuis le capteur (10) jusqu'à l'objet (18), **caractérisé en ce que** la première unité de comparaison (36a), la seconde unité de comparaison (36b) et l'unité de commande et d'évaluation (30) sont réalisées pour récupérer, au moyen du premier seuil et du second seuil, trois états numériques d'une portion respective du signal de réception et pour pondérer les contributions de la portion à l'histogramme selon l'état numérique, et **en ce que** les deux seuils sont disposés, en particulier de manière symétrique, autour d'une ligne nulle du signal de réception, et l'état numérique entre les deux seuils correspond à une bande de bruit qu'il s'agit de masquer.

2. Capteur (10) selon la revendication 1, qui comprend au moins une autre paire d'unités de comparaison, afin de récupérer un nombre impair d'états numériques de la portion respective du signal de réception.

3. Capteur (10) selon la revendication 1 ou 2, dans lequel le premier seuil et le second seuil présentent des signes différents et en particulier la même valeur.

4. Capteur (10) selon l'une des revendications précédentes, dans lequel l'unité de commande et d'évaluation (30) est mise en oeuvre sur un composant numérique (28), en particulier un composant logique programmable, un ASIC ou un FPGA.

5. Capteur (10) selon la revendication 4, dans lequel les unités de comparaison sont mises en oeuvre via des entrées du composant numérique (28).

6. Capteur (10) selon l'une des revendications précédentes, dans lequel un circuit de prétraitement analogique (26), avec un filtre (34) pour la conversion d'un signal de réception tout d'abord monopolaire en un signal bipolaire, est agencé entre le récepteur (20) et les unités de comparaison (36a-b).

7. Capteur (10) selon l'une des revendications précédentes, dans lequel un filtre passe-bas est agencé entre le récepteur (20) et les unités de comparaison (36a-b).

8. Capteur (10) selon l'une des revendications précédentes,
qui est réalisé sous forme de capteur optoélectronique et en particulier de scanner à laser, dans lequel l'émetteur (12) est un émetteur de lumière et le récepteur (20) et un récepteur de lumière.

9. Capteur (10) selon l'une des revendications précédentes,
qui est réalisé sous forme de capteur de sécurité, en particulier scanner de sécurité, comprenant une sortie de sécurité et dans lequel l'unité de commande et d'évaluation (30) est réalisée pour reconnaître des interventions inadmissibles dans des champs protégés à l'intérieur de la zone de surveillance et pour délivrer suite à cela un signal de coupure à vocation de sécurité au niveau de la sortie de sécurité.

10. Procédé pour la détection et la détermination de distance d'objets (18) dans une zone de surveillance, dans lequel on émet une pluralité d'impulsions émises et on engendre des signaux de réception à partir des impulsions émises réémises dans la zone de surveillance, signaux de réception qui sont numérisés avec l'aide d'une première unité de comparaison (36a) et d'une seconde unité de comparaison (36b) avec un premier seuil et un second seuil et qui sont collectés dans un histogramme, afin de déterminer un instant de réception à partir de l'histogramme et ainsi une valeur de mesure pour le temps de parcours du signal jusqu'à l'objet (18), **caractérisé en ce que**, avec les deux seuils on récupère trois états numériques d'une portion correspondante des signaux de réception et les contributions de la portion à l'histogramme sont pondérées selon l'état numérique, et **en ce que** les deux seuils sont disposés, en particulier symétriquement, autour d'une ligne nulle du signal de réception, et l'état numérique entre les deux seuils correspond à une bande de bruit qu'il s'agit de masquer.

Figur 1

Figur 2

Figur 3

Figur 4

Figur 5

Figur 6a

Figur 6b

Figur 7

EP 2 942 645 B1

**IN DER BESCHREIBUNG AUFGEFÜHRTE DOKUMENTE**

**In der Beschreibung aufgeführte Patentdokumente**

- EP 1972961 A1
- EP 2469296 A1
- EP 2189804 A1
- EP 2189805 A1